# EUROPEAN PATENT SPECIFICATION

(11) **EP 1 964 935 B1**
(45) Date of publication and mention of the grant of the patent: **22.02.2012**
(21) Application number: 06834985.1
(22) Date of filing: 13.12.2006
(51) Int. Cl.: C21D 9/00, C22C 38/00, C22C 38/16, F16G 5/18, F16G 13/02

(54) **LINK CHAIN EXCELLENT IN LOW-TEMPERATURE TOUGHNESS AND METHOD FOR HEAT TREATMENT THEREOF**
GLIEDERKETTE MIT HERVORRAGENDER KÄLTEZÄHIGKEIT UND VERFAHREN ZUR WÄRMEBEHANDLUNG DAVON
CHAINE A MAILLONS PRESENTANT UNE EXCELLENTE TENACITE A BASSE TEMPERATURE ET PROCEDE DE TRAITEMENT THERMIQUE DE LADITE CHAINE

(30) Priority: 20.12.2005 JP 2005366305; 31.07.2006 JP 2006208640
(43) Date of publication of application: 03.09.2008
(73) Proprietor: Kito Corporation, Nakakoma-gun, Yamanashi 409-3853 (JP)
(72) Inventor: ISHIHARA, Tomoya, Yamanashi 409-3853 (JP)
(74) Representative: Hoeger, Stellrecht & Partner Patentanwälte
(86) International application number: PCT/JP2006/325315
(87) International publication number: WO 2007/072836

(56) References cited:
- JP-A- 5 098 357
- JP-A- 05 098 357
- JP-A- 62 202 026
- JP-A- 62 202 026
- JP-A- 2003 221 621

## Description

### TECHNICAL FIELD

The present invention relates to a link chain superior in low temperature toughness comprised of one or more links connected together and a heat treatment method for obtaining this link chain.

### BACKGROUND ART

JP 62-202026 A discloses a method of producing a high-fracture toughness chain.

In the past, steel links or link chains have been given the necessary strength and toughness by heating in an electric furnace etc. to 900°C, holding, then oil quenching them for rapid cooling, then by tempering them at about 450°C for about 1 hour to obtain a 100% tempered martensite structure free of any ferrite structure and having a grain size of a relatively coarse 6.5 or so and to obtain characteristics of a hardness of 54HRC, a breakage stress of 930N/mm², and a -40°C toughness value of 0.034J/mm³. However, link chains are required to be satisfactory in both strength and toughness. With this conventional material, it was impossible to secure a proper balance of strength and toughness.

On the other hand, recently, the usage environments of link chains have become tougher. For example, there is a rising need for use under low temperature environments of - 40°C or less. Link chains are being exposed to low temperatures or ultralow temperatures in increasing instances. Along with such changes in the usage environments, tough performances of a tensile strength of 1000N/mm² and a -40°C low temperature toughness of 45J or more are being demanded.

Attempts are being made to develop link chains meeting these requirements. For example, Japanese Patent Publication (A) No. 2003-221621 proposes the art of making the structure of a link chain after heat treatment a mixed structure of a 60 to 90% tempered martensite structure and a 10 to 40% tempered ferrite structure and making the grain size 12.5, that is, a fine structure. To obtain the mixed structure proposed in this patent, it is necessary to treat the link chain by high frequency induction heating or another means in the austenite + ferrite coexisting region by rapid heating to about 830°C, then rapid cooling for quenching, then tempering at 400°C or less. However, in such a method, while it is possible to obtain a link chain provided with both strength and toughness, obtaining the mixed structure of a 60 to 90% tempered martensite structure and a 10 to 40% tempered ferrite structure stably at all times requires strict temperature control, so this really cannot be said to be a practical means.

### DISCLOSURE OF THE INVENTION

The present invention provides a link chain having a fine austenite grain size after heat treatment, superior in strength and toughness by strict control of the precipitates contained in the link chain, and giving a high impact value even under a -40°C low temperature environment and a heat treatment method of the same. It has as its gist the following:
(1) A link chain superior in low temperature toughness according to claim 1.
(2) A method of production of link chain according to claim 3.

### BRIEF DESCRIPTION OF THE DRAWINGS

FIG. 1(a) is a view showing the state of distribution of the precipitated size of TiC, while FIG. 1(b) is a view showing the state of distribution of the precipitated size of Ti (C, N).
FIG. 2 is a view showing the ratio of precipitation of TiC and Ti (C, N).

### BEST MODE FOR CARRYING OUT THE INVENTION

The present invention provides a link chain having a superior low temperature toughness of a -40°C Charpy impact value of 45J or more by treating a link chain produced from low carbon steel (MnB steel) wire by a two-stage quenching-tempering treatment so as to make the link chain structure a martensite single phase and to make the austenite grain size a finer 9 to 12 and a heat treatment method of the same.

First, as the link chain wire used in the present invention, a low carbon steel (MnB steel) wire is preferable. Wire having a composition, by mass%, of C: 0.18 to 0.28%, Si: 0.10 to 0.30%, Mn: 1.00 to 1.70%, Cu: 0.10% or less, Ni: 0.40% or less, Al : 0.02 to 0.10%, Ti: 0.015 to 0.10%, B: 0.0003 to 0.0050%, and a balance of Fe and unavoidable impurities was used as the starting material. That is, this MnB steel is increased in strength by raising the C, Si, and Mn and including B for raising the quenchability. Furthermore, it is made to include Al for preventing coarsening of the grains and is made to include Ti for securing the efficacy of the B. Further, to secure the toughness, it is preferable to use MnB reducing the P, S, and Cu and further, considering the economic merits, greatly reducing the Ni to be substantially less than 0.4 by mass% or almost not present in the MnB used. Below, the reasons for limitation of the amounts of the above composition will be explained.

C is an element essential for raising the strength of the wire material of the chain link. If less than 0.18%, sufficient strength cannot be obtained, while if over 0.28%, cementite precipitates at the grain boundaries and, further, the toughness is remarkably lowered.

Si is an element which solid-solves in steel as a substitution type element and is effective for raising the strength and heat resistance of the wire material. If less than 0.10%, the effect is not sufficient, while if over 0.30%, it will not be able to completely dissolve in the steel and will cause the workability to remarkably deteriorate.

Mn improves the quenchability, immobilizes the S, and prevents problems unique to S. If less than 1.00%, the effect is almost completely absent, while if over 1.70%, the toughness falls.

Cu degrades the hot workability, so should be as small as possible and is made not more than 0.10%. Ni is preferably substantially not contained at all, but is included as an impurity. The upper limit is made not more than 0.40%, preferably not more than 0.1 by mass%.

Al forms AlN and makes the grains finer. If less than 0.02%, that effect does not appear, while if over 0.10%, it connects with N to form nitrides, produces a large amount of AlN, and further obstructs the effect of increasing the amount of dissolved N, so the content is made not more than 0.10%.

Ti is an element forming carbides (TiC) and carbonitrides (Ti (C,N)) and is effective for making the grains finer. Further, it raises the efficacy of B. If less than 0.015%, this effect is small, while if over 0.10%, hard high melting point inclusions of TiO are produced and the workability is degraded, so 0.10% is made the upper limit.

B is an element essential for raising the quenchability. If 0.0003% or more, that effect is exhibited, but if added over 0.0050%, it forms a large amount of BN and degrades the workability.

Note that P and S lower the ductility, so are preferably as small as possible. The upper limits are 0.02%.

Steel links or a plurality of these are connected to a link chain are produced by welding this wire. In the present invention, the thus formed steel links or link chain connecting a plurality of these is quenched-tempered, preferably two-stage quenched-tempered, that is, the link chain is heated to a temperature of Ac₃ to Ac₃+150°C, then rapidly cooled to quench it, then is heated to a temperature of Ac₃ to Ac₃+50°C, then rapidly cooled for quenching and further is tempered at a temperature of Ac₁ or less.

The first stage heat treatment uses a high frequency induction heating, electric heating, laser heating, or another device to rapidly heat the chain to an austenite single phase region of Ac₃ to Ac₃+150°C, specifically 930°C or less, then rapidly cools it to quench it. The reason for setting the above temperature region in this rapid heating is to make an austenite single phase in a solid-solved state with C uniformly diffused in this temperature region. Above this temperature, the austenite grains become coarser and it becomes difficult to secure an austenite grain size of 9 to 12 after the subsequent step of quenching. Further, with heating at below the above temperature, the result becomes not an austenite single phase region, but a coexisting region of austenite+ferrite. Note that the heating time is not particularly limited, but if considering the time for passing through the induction heating coil, it is about 10 to 40 sec. The thus rapidly heated link chain is quenched from the above austenite single phase region to ordinary temperature. The coolant used in this quenching is oil, water, mist, etc. Note that in the present invention, to ease the internal stress at the time of this first stage quenching or to prevent season cracking, the chain may also be tempered.

Next, after the above first stage heat treatment, as second stage heat treatment, the chain is rapidly heated to a temperature of Ac₃ to Ac₃+50°C, specifically 830°C or less, by similar means as the heating device used in the first stage. The reason for making the temperature of the second stage rapid heating Ac₃ to Ac₃+50°C is obtain a uniform austenite single phase structure without causing coarsening of the grains and, further, to secure an austenite grain size of 9 to 12.

The above-mentioned two-stage quenched link chain is then treated to stabilize the steel structure and to restore the toughness and obtain the desired strength and hardness by tempering it at a temperature of the Ac₁ or less, preferably 200°C, for about 1 hour to make the link chain a martensite structure.

The thus treated link chain had a structure in which 40 nm or smaller TiC precipitates were contained in 80% or more and 80 nm or smaller Ti(C,N) precipitates were contained in 20% or less in a good balance. If the size of the TiC is over 40 nm and the size of the Ti(C,N) is over 80 nm, coarse TiC and Ti(C,N) precipitate and the austenite grain size of 9 to 12 prescribed in the present invention can no longer be stably obtained.

### EXAMPLES

Link chains produced from a low carbon steel (MnB steel) wire of a wire diameter of 16.0 mm having the chemical compositions shown in Table 1 were, as a comparative example, treated by the conventional single-stage quenching-tempering and, according to the present invention, treated by two-stage quenching-tempering. The characteristics obtained were compared.

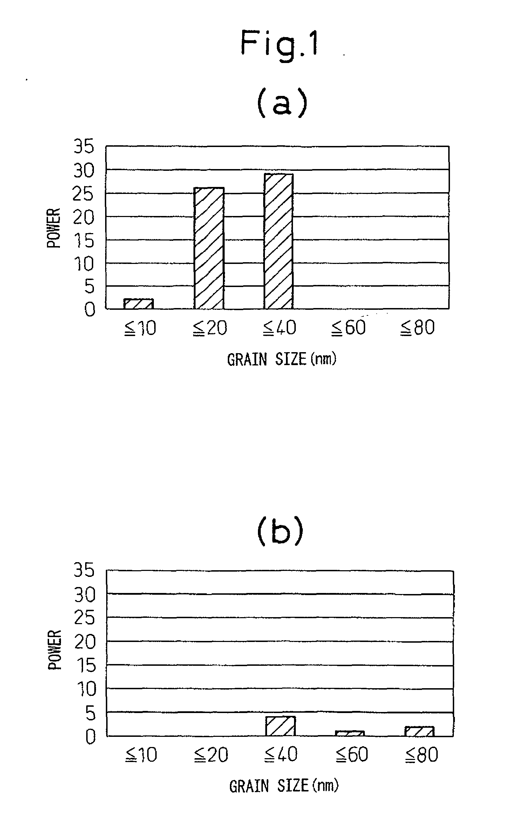

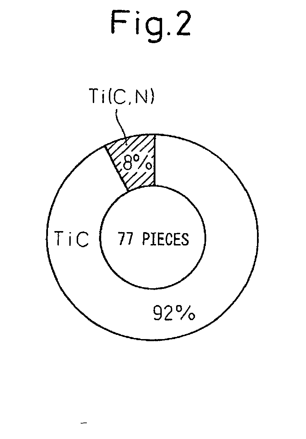

First, as the single-stage quenching-tempering of the comparative example, a high frequency induction heating device was used to rapidly heat the link chain to the 930°C austenite region, then the chain was rapidly cooled from the austenite single phase for quenching, then was tempered at 200°C for 1 hour. On the other hand, as an example of the present invention, 1) high frequency induction heating was used to rapidly heat the link chain to the 930°C austenite region, then the chain was rapidly cooled from the austenite single phase for quenching, 2) next, high frequency induction heating was used to further rapidly heat the link chain to 830°C, then the chain was rapidly cooled from the austenite single phase for second quenching, 3) furthermore, the chain was tempered at 200°C for 1 hour. This two-stage quenching-tempering was performed to make the structure of the link chain a martensite structure. A sample was extracted from the straight shank part of the heat treated link chain obtained in this way. A Charpy test piece (JIS V-notch test piece) was extracted from the straight shank part of the link chain, then the metallic structure was investigated and an impact test was conducted. The results of examination of the metal structure are shown in FIGS. 1(a), (b) and FIG. 2.

FIG. 1(a) shows the results of analysis of the state of distribution of the precipitated size of TiC by a transmission type electron microscope (TEM), while FIG. 1(b) shows the results of analysis of the state of distribution of the precipitated size of Ti(C,N) by a TEM. As will be understood from FIGS. 1(a) and (b), in the present invention, almost no TiC particles of over 40 nm size precipitated, while similarly almost no Ti(C,N) particles of over 80 nm size precipitated. Further, as shown in FIG. 2, the ratio of distribution of precipitation of TiC and Ti(C,N) is TiC: 92% and Ti(C,N): 8% or overwhelmingly TiC. The austenite grain size is believed to be unambiguously dependent on the state of distribution of precipitation of TiC and its ratio.

Next, the above Charpy test pieces were subjected to an impact test. The results are shown in Table 2 and Table 3. As will be understood from Table 2 and Table 3, the Charpy impact value (J) at -40°C was a high value of 72.7J, while the value due to the conventional single-stage heat treatment was an extremely low value of 19.0J. It will be understood that the two-stage heat treatment according to the present invention gives a superior low temperature toughness of 2 to 3 times that of the past.

**Table 1. Chemical Compositions of Test Materials (by mass%)**

| Material | C | Si | Mn | P | S | Cu | Ni | Cr | Mo | Al | Ti | N | B |
|---|---|---|---|---|---|---|---|---|---|---|---|---|---|
| Range of ingredient | 0.18 to 0.28 | 0.10 to 0.30 | 1.00 to 1.70 | 0. or 02 less | 0.02 or less | 0.10 or less | 0.10 or less | Not limited | Not limited | 0.02 to 0.10 | 0.015 to 0.10 | Not limited | 0.0003 to 0.0050 |
| Measured value | 0.26 | 0.12 | 1.38 | 0.011 | 0.005 | 0.01 | 0.02 | 0.03 | | 0.029 | 0.029 | 0.0031 | 0.0022 |

**Table 2. Chain Performance**

| | Breakage stress (N/mm²) | Total elongation at break (%) | Hardness (Hv) | Austenite grain size |
|---|---|---|---|---|
| Comp. ex. | 1039 | 25.5 | 481 | 8 to 9 |
| Inv. ex. | 1025 | 25.3 | 478 | 10 to 11 |

**Table 3. Results of Charpy Impact Test (J)**

| | -80°C | -60°C | -40°C | -20°C | 0°C | +20°C | +40°C | +60°C |
|---|---|---|---|---|---|---|---|---|
| Comp. ex. | 12.3 | 17.7 | 19.0 | 32.3 | 45.3 | 60.0 | 75.3 | 79.3 |
| Inv. ex. | 44.7 | 62.7 | 72.7 | 82.3 | 107.7 | 117.0 | 130.3 | 129.0 |

### INDUSTRIAL APPLICABILITY

According to the present invention, it becomes possible to provide, at low cost, a link chain having high impact value even in a usage environment under a low temperature condition of -40°C by making the structure a martensite structure with the finer grains of the link chain.

## Claims

1. A link chain superior in low temperature toughness **characterized in that** said link chain consist of, by mass%, C: 0.18 to 0.28%, Si: 0.10 to 0.30%, Mn: 1.00 to 1.70%, Cu: 0.10% or less, Ni: 0.40% or less, Al: 0.02 to 0.10%, Ti: 0.015 to 0.10%, B: 0.0003 to 0.0050%, and a balance of Fe and unavoidable impurities, has a martensite single phase structure containing precipitate comprised of 40 nm or smaller TiC in 90% or more and 80 nm or smaller Ti(C,N) in 10% or less, and an austenite grain size of 9 to 12, further containing AIN in not more than 0.0003%, and having a -40°C Charpy impact value of at least 45J.

2. A link chain according to claim 1, **characterized in that** the -40°C Charpy impact value is 72.7J.

3. A method of production of link chain in low temperature toughness **characterized in that** performing heat treatment comprising two-stage high frequency quenching-tempering comprises the steps of:
heating a link chain having a composition consist of, by mass%,
C: 0.18 to 0.28%, Si: 0.10 to 0.30%, Mn: 1.00 to 1.70%, Cu: 0.10% or less, Ni: 0.40% or less, Al: 0.02 to 0.10%, Ti: 0.015 to 0.10%,
B: 0.0003 to 0.0050%, and a balance of Fe and unavoidable impurities, to a temperature of Ac₃ to Ac₃+150°C, then rapid cooling it to quench it, then heating it to a temperature of Ac₃ to Ac₃+50°C, then rapid cooling it to quench it, and
further tempering it to a temperature of Ac₁ or less, whereby the resultant link chain has a martensite single phase structure containing precipitate comprised of 40 nm or smaller TiC in 90% or more and 80 nm or smaller Ti (C, N) in 10% or less, an austenite grain size of 9 to 12, further containing AIN in not more than 0.0003%, and having a -40°C Charpy impact value of at least 45J.

4. A method according to claim 3, **characterized in that** the -40°C Charpy impact value is 72.7J.

## Patentansprüche

1. Gliederkette mit hervorragender Kältezähigkeit, **dadurch gekennzeichnet, dass** die Kette in Massen-% besteht aus: C: 0,18 bis 0,28%, Si: 0,10 bis 0,30%, Mn: 1,00 bis 1,70%, Cu: 0,10% oder weniger, Ni: 0,40% oder weniger, Al: 0,02 bis 0,10%, Ti: 0,015 bis 0,10%, B: 0,0003 bis 0,0050% und einem Rest aus Fe und unvermeidbaren Verunreinigungen, eine Martensit-Einzelphasenstruktur hat, die einen Niederschlag enthält, der aus 40nm- oder kleinerem TiC zu 90% oder mehr und 80nm- oder kleinerem Ti(C,N) zu 10% oder weniger besteht und eine Austenit-Korngröße von 9 bis 12 hat, weiters AlN zu nicht mehr als 0,0003% enthält und einen Charpy-Kerbschlagzähigkeitswert bei - 40°C von mindestens 45J hat.

2. Gliederkette nach Anspruch 1, **dadurch gekennzeichnet, dass** der Charpy-Kerbschlagzähigkeitswert bei -40°C 72,7J beträgt.

3. Verfahren zur Herstellung einer Gliederkette mit Kältezähigkeit, **dadurch gekennzeichnet, dass** die Durchführung einer Hitzebehandlung mit Zweistufen-Hochfrequenz-Vergüten die Schritte umfasst: Erhitzen einer Gliederkette mit einer Zusammensetzung, die in Massen-% besteht aus: C: 0,18 bis 0,28%, Si: 0,10 bis 0,30%, Mn: 1,00 bis 1,70%, Cu: 0,10% oder weniger, Ni: 0,40% oder weniger, Al: 0,02 bis 0,10%, Ti: 0,015 bis 0,10%, B: 0,0003 bis 0,0050% und einem Rest aus Fe und unvermeidbaren Verunreinigungen, auf eine Temperatur von Ac₃ bis Ac₃+150°C, danach rasches Abkühlen derselben, um sie abzuschrecken, danach Erhitzen derselben auf eine Temperatur von Ac₃ bis Ac₃+50°C, danach rasches Abkühlen derselben, um sie abzuschrecken, und weiteres Vergüten auf einer Temperatur von Ac₁ oder weniger, wodurch die resultierende Gliederkette eine Martensit-Einzelphasenstruktur hat, die einen Niederschlag enthält, der aus 40nm- oder kleinerem TiC zu 90% oder mehr und 80nm- oder kleinerem Ti(C,N) zu 10% oder weniger besteht, eine Austenit-Korngröße von 9 bis 12 hat, weiters AlN zu nicht mehr als 0,0003% enthält und einen Charpy-Kerbschlagzähigkeitswert bei - 40°C von mindestens 45J hat.

4. Verfahren nach Anspruch 3, **dadurch gekennzeichnet, dass** der Charpy-Kerbschlagzähigkeitswert bei -40°C 72,7J beträgt.

## Revendications

1. Chaîne à maillons présentant une excellente ténacité à basse température **caractérisée en ce que** ladite chaîne à maillons est constituée, en % en masse, de C : 0,18 à 0,28 %, Si : 0,10 à 0,30 %, Mn : 1,00 à 1,70 %, Cu : 0,10 % ou moins, Ni : 0,40 % ou moins, Al : 0,02 à 0,10 %, Ti : 0,015 à 0,10 %, B : 0,0003 à 0,0050 %, et le reste étant du Fe et des impuretés inévitables, a une structure monophase martensitique contenant un précipité comportant 40 nm ou moins de TiC à 90 % ou plus et 80 nm ou moins de Ti(C,N) à 10 % ou moins, et une grosseur de grain austénitique de 9 à 12, contenant en outre AlN à pas plus de 0,0003 %, et ayant une valeur de résilience Charpy à -40 °C d'au moins 45 J.

2. Chaîne à maillons selon la revendication 1, **caractérisée en ce que** la valeur de résilience Charpy à -40 °C est de 72,7 J.

3. Méthode de production d'une chaîne à maillons présentant une excellente ténacité à basse température, **caractérisée en ce que** la réalisation d'un traitement thermique comprenant une étape de trempe-revenu à haute fréquence en deux phases comprend les étapes consistant à :
chauffer une chaîne à maillons ayant une composition constituée, en % en masse, de C : 0,18 à 0,28 %, Si : 0,10 à 0,30 %, Mn : 1,00 à 1,70 %, Cu : 0,10 % ou moins, Ni : 0,40 % ou moins, Al : 0,02 à 0,10 %, Ti : 0,015 à 0,10 %, B : 0,0003 à 0,0050 %, et le reste étant du Fe et des impuretés inévitables, à une température de Ac₃ à Ac₃ + 150 °C, puis la refroidir rapidement pour la tremper, puis la chauffer à une température de Ac₃ à Ac₃ + 50°C, puis la refroidir rapidement pour la tremper, et
faire à nouveau un revenu à une température de Ac₁ ou moins, moyennant quoi la chaîne à maillons résultante a une structure monophase martensitique contenant un précipité comportant 40 nm ou moins de TiC à 90 % ou plus et 80 nm ou moins de Ti(C,N) à 10 % ou moins, une grosseur de grain austénitique de 9 à 12, contenant en outre AlN à pas plus de 0,0003 %, et ayant une valeur de résilience Charpy à -40 °C d'au moins 45 J.

4. Méthode selon la revendication 3, **caractérisée en ce que** la valeur de résilience Charpy à -40 °C est de 72,7 J.
